# EUROPÄISCHE PATENTSCHRIFT

(11) **EP 3 473 733 B1**
(45) Veröffentlichungstag und Bekanntmachung des Hinweises auf die Patenterteilung: **12.02.2020**
(21) Anmeldenummer: 18191604.0
(22) Anmeldetag: 30.08.2018
(51) Int. Cl.: C21C 5/52, C21C 5/56, C21C 7/00, C22B 7/00, C22B 13/02, F27B 3/08, F27B 3/10, F27B 3/18, F27B 3/19, F27D 3/15

(54) **ZWISCHENBEHÄLTER ZUR SCHLACKENABTRENNUNG**
INTERMEDIATE CONTAINER FOR SEPARATION OF SLAG
RÉCIPIENT INTERMEDIAIRE POUR LA SÉPARATION DE LAITIER

(30) Priorität: 19.10.2017 DE 102017218649
(43) Veröffentlichungstag der Anmeldung: 24.04.2019
(73) Patentinhaber: SMS Group GmbH, 40237 Düsseldorf (DE)
(72) Erfinder: Voj, Lukas Peter, 50858 Köln (DE); Krause, Fabian, 41462 Neuss (DE); Kemminger, Dr. Andreas, 40213 Düsseldorf (DE)
(74) Vertreter: Klüppel, Walter

(56) Entgegenhaltungen:
- EP-A1- 0 429 978
- DE-B1- 2 325 593
- FR-A- 1 326 751
- JP-A- 2007 232 273
- US-A- 3 865 579

## Beschreibung

### Technisches Gebiet

Die Erfindung betrifft eine Vorrichtung und ein Verfahren zur kontinuierlichen Herstellung von Metall, vorzugsweise Stahl. Die Vorrichtung weist ein Einschmelzgefäß zum Einschmelzen metallischer Einsatzmaterialen, wodurch ein Schmelzgut aus flüssigem Metall und Schlacke hergestellt wird, und einen Zwischenbehälter auf.

### Hintergrund der Erfindung

Vorrichtungen und Verfahren zur Herstellung von Stahl aus Einsatzmaterialien wie Schrott, Eisenschwamm und dergleichen sind bekannt. So beschreibt die WO 2013/163983 A1 ein Schrottschmelzofen-Pfannenofen-System, bei dem der Schrott im Schrottschmelzofen eingeschmolzen und die Metallschmelze in einen Pfannenofen abgestochen wird, in dem ein Überhitzen des geschmolzene Metalls durch elektrische Energie, insbesondere einen Lichtbogen, erfolgt und der Stahl ggf. fertig legiert wird. Die Überführung der Schrottschmelze in den Pfannenofen kann kontinuierlich oder chargenweise erfolgen.

Bei einem kontinuierlichen Betrieb ist normalerweise eine hohe Überhitzungstemperatur im Schmelzofen erforderlich, um das flüssige Metall ohne Bildung von Ansätzen transportieren, auffangen und weiterverarbeiten zu können. Diese Gründe stehen auch einer problemlosen Pufferung des geschmolzenen Metalls entgegen.

Die DE 2 325 593 A beschreibt eine Vorrichtung und ein Verfahren zum kontinuierlichen Herstellen von Stahl, wobei die Einsatzmaterialien (Schrott, Eisenschwamm usw.) in einem Einschmelzgefäß aufgeschmolzen und in ein beheiztes Durchlaufgefäß gefüllt werden, in dem kontinuierlich eine Schlackenabscheidung erfolgt, das im Gefäß befindliche Material überhitzt und durch Zugabe entsprechender Legierungs- und Desoxydationszuschläge die gewünschte Stahlanalyse eingestellt wird.

Die EP 0 429 978 A1 beschreibt ein Verfahren und eine Vorrichtung zum kontinuierlichen Abstechen von Metall und Schlacke im geschmolzenen Zustand. Die JP 2007-232273 A beschreibt einen Schmelzofen zur Herstellung von Metall durch Einschmelzen von metallischen Einsatzmaterialen. Die US 3,865,579 A und die FR 1.326.751 A betreffen die Herstellung von Stahl.

### Darstellung der Erfindung

Eine Aufgabe der Erfindung besteht darin, die kontinuierliche Herstellung von Metall weiter zu verbessern, insbesondere eine Vorrichtung und ein Verfahren bereitzustellen, die eine Pufferfunktion mit einer besonders energieeffizienten Herstellung von Metall, vorzugsweise Stahl, verbinden.

Gelöst wird die Aufgabe mit einer Vorrichtung mit den Merkmalen des Anspruchs 1 sowie einem Verfahren mit den Merkmalen des Anspruchs 8. Vorteilhafte Weiterbildungen folgen aus den Unteransprüchen, der folgenden Darstellung der Erfindung sowie der Beschreibung bevorzugter Ausführungsbeispiele.

Die erfindungsgemäße Vorrichtung dient der kontinuierlichen Herstellung von Metall, vorzugsweise Stahl. Die Vorrichtung weist ein Einschmelzgefäß zum Einschmelzen metallischer Einsatzmaterialen, wie etwa Schrott, Eisenschwamm, Pellets usw., auf, wodurch ein Schmelzgut, das flüssiges Metall und Schlacke umfasst, hergestellt wird. Das Einschmelzgefäß kann als Schachtofen ausgeführt sein.

Die Vorrichtung weist ferner einen Zwischenbehälter auf. Der Zwischenbehälter weist ein Wehr auf, das den Zwischenbehälter - genauer gesagt: den Auffangraum des Zwischenbehälters - in einen ersten Auffangraum, in den das Schmelzgut aus dem Einschmelzgefäß über einen Ausfluss auf kontinuierliche Weise einbringbar ist, und einen zweiten Auffangraum unterteilt. Die beiden Auffangräume stehen über einen Durchgang in Fluidkommunikation, wodurch eine Trennung der Schlacke und des flüssigen Metalls derart erfolgt, dass sich die Schlacke im ersten Auffangraum sammelt, während im zweiten Auffangraum im Wesentlichen keine Schlacke vorhanden ist. In anderen Worten: Im ersten Auffangraum befindet sich eine Mischung aus Schlacke und flüssigem Metall, wobei sich die Schlacke aufgrund des geringeren Gewichts an der Oberfläche sammelt, während im zweiten Auffangraum im Wesentlichen ausschließlich flüssiges Metall vorhanden ist, das der Weiterverarbeitung zur Verfügung steht. Der Durchgang befindet sich zum Zweck der Trennung vorzugsweise am Boden des Zwischenbehälters, aufgrund der geringeren Dichte der Schlacke. Das Wehr verhindert, dass die Schlacke in den zweiten Auffangraum gerät, wohingegen der Durchgang dafür sorgt, dass sich der zweite Auffangraum mit geschmolzenem Metall füllt. Auf diese Weise findet die Abscheidung der Schlacke vom flüssigen Metall statt.

Die erfindungsgemäße Vorrichtung weist ferner eine Heizeinrichtung auf, die das Schmelzgut im ersten Auffangraum temperiert. In anderen Worten: Es findet eine Temperierung des Schmelzguts im ersten Auffangraum, somit unmittelbar hinter dem Ausfluss aus dem Einschmelzgefäß, mittels einer dort eingerichteten Heizeinrichtung statt. Zu diesem Zweck weist die Heizeinrichtung vorzugsweise ein Heizelement auf, das direkt mit dem Schmelzgut im ersten Auffangraum in Kontakt kommt. Unter der Bezeichnung "Temperierung" kann sowohl eine Temperaturerhöhung als auch eine Aufrechterhaltung der Temperatur durch aktives Heizen umfasst sein.

Die Temperierung des Schmelzguts im ersten Auffangraum trägt maßgeblich dazu bei, dass auf eine starke Überhitzung des Einsatzmaterials im Einschmelzgefäß verzichtet werden kann. Dies wiederum ermöglicht einen energieschonenden Betrieb der Vorrichtung. Zudem wird das Metall im Zwischenbehälter auf ökonomische Weise gepuffert, ohne dass es zu Qualitätseinbußen kommt. Durch die Pufferung können beispielsweise Unterbrechungen bei der Weiterverarbeitung oder unterschiedliche Verarbeitungsgeschwindigkeiten kompensiert werden.

Vorzugsweise weist die Heizeinrichtung auf: einen Brenner, vorzugsweise Plasmabrenner, dessen Flamme mit dem Schmelzgut im ersten Auffangraum in Kontakt bringbar ist, und/oder Elektroden für ein Lichtbogenerhitzen, die vorzugsweise in das Schmelzgut im ersten Auffangraum eintauchbar sind. Die Temperierung mittels eines Brenners oder durch Lichtbogenerhitzen ist besonders gut für große Schmelzmassen, so etwa über 5 t, und dicke feuerfeste Wanddicken geeignet.

Erfindungsgemäß ist das Wehr zur Einstellung des Durchgangs beweglich vorgesehen, so kann es etwa vertikal heb- und senkbar eingerichtet sein, wodurch der Öffnungsquerschnitt des Durchgangs änderbar ist. Auf diese Weise kann die Funktion des Zwischenbehälters an verschiedene Betriebsbedingungen angepasst werden, insbesondere die Abtrennung der Schlacke optimiert werden.

Aus den gleichen Gründen ist der Zwischenbehälter vorzugsweise kippbar eingerichtet. Durch Kippen des Zwischenbehälters lässt sich ferner die Ausflussmenge des flüssigen Metalls und/oder der Schlacke aus dem Zwischenbehälter regulieren.

Vorzugsweise weist das Zwischengefäß einen Schlackenauslauf auf, über den die Schlacke aus dem ersten Auffangraum abführbar ist, wobei der Schlackenauslauf vorzugsweise einen einstellbaren, beispielsweise schwenkbaren, Überlauf aufweist. Über den Schlackenauslauf läuft die Schlacke aus dem ersten Auffangraum beispielsweise in eine Schlackenpfanne oder ein anderes Auffanggefäß. Das Zwischengefäß weist ferner vorzugsweise einen Metallauslauf auf, über den das geschmolzene Metall aus dem zweiten Auffangraum abführbar ist, wobei der Metallauslauf vorzugsweise einen einstellbaren, etwa schwenkbaren, Überlauf aufweist. Über den Metallauslauf läuft das flüssige Metall aus dem zweiten Auffangraum beispielsweise in einen Torpedowagen, eine Stahlpfanne oder eine andere Einrichtung zum Transport und/oder zur Weiterverarbeitung des flüssigen Metalls, beispielsweise eine Kokille einer

Stranggießanlage. Die Schlackenabscheidung und/oder Metallabscheidung kann auf diese Weise kontinuierlich erfolgen und auf einfache Weise reguliert werden.

Das erfindungsgemäße Verfahren betrifft die kontinuierliche Herstellung von Metall, vorzugsweise Stahl, und weist die Schritte auf: Einschmelzen von metallischen Einsatzmaterialien in einem Einschmelzgefäß, wodurch ein Schmelzgut, das flüssiges Metall und Schlacke umfasst, hergestellt wird; Einbringen des Schmelzguts aus dem Einschmelzgefäß über einen Ausfluss in einen ersten Auffangraum eines Zwischenbehälters auf kontinuierliche Weise, wobei der Zwischenbehälter ein Wehr aufweist, das den Zwischenbehälter in den ersten Auffangraum und einen zweiten Auffangraum unterteilt, wobei die beiden Auffangräume über einen Durchgang in Fluidkommunikation stehen; Trennen der Schlacke und des flüssigen Metalls in dem Zwischenbehälter derart, dass sich die Schlacke im ersten Auffangraum sammelt, während im zweiten Auffangraum im Wesentlichen keine Schlacke vorhanden ist; und Temperieren des Schmelzguts im ersten Auffangraum mittels einer Heizeinrichtung.

Die technischen Wirkungen, bevorzugten Ausführungsformen und Beiträge zum Stand der Technik, die in Bezug auf die Vorrichtung beschrieben wurden, gelten analog für das Verfahren.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale realisiert werden, insofern sich die Merkmale nicht widersprechen. Die folgende Beschreibung der bevorzugten Ausführungsbeispiele erfolgt mit Bezug auf die begleitenden Zeichnungen.

### Kurze Beschreibung der Figuren

Die Figur 1 zeigt schematisch eine Vorrichtung zur kontinuierlichen Herstellung von Metall mit einem Zwischenbehälter zur Schlackenabtrennung gemäß einem ersten Ausführungsbeispiel.
Die Figur 2 zeigt schematisch eine Vorrichtung zur kontinuierlichen Herstellung von Metall mit einem Zwischenbehälter zur Schlackenabtrennung gemäß einem zweiten Ausführungsbeispiel.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente mit identischen Bezugszeichen versehen, und auf eine wiederholende Beschreibung dieser Elemente wird teilweise verzichtet, um Redundanzen zu vermeiden.

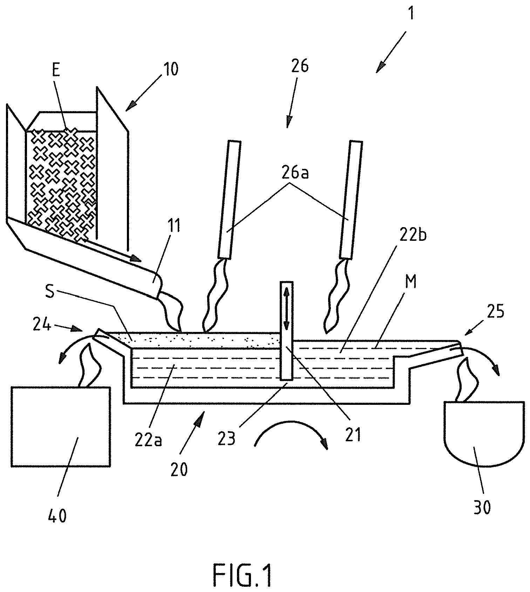

Die Vorrichtung 1 der Figur 1 weist ein Einschmelzgefäß 10 auf, das als Schachtofen ausgeführt sein kann, zum Einschmelzen eines Einsatzmaterials E, etwa Schrott, Eisenschwamm, Pellets usw.. Dazu wird das Einsatzmaterial E in das Einschmelzgefäß 10 eingebracht und dort mittels einer nicht dargestellten Heizvorrichtung erhitzt. Das Einschmelzen kann beispielsweise mittels eines lanzenförmigen Öl-Sauerstoffbrenners erfolgen, wobei die vom Brenner erzeugte Flamme das Einsatzmaterial von unten beaufschlagt und aufschmilzt. Das dadurch gebildete Schmelzgut, das flüssiges Metall M, vorzugsweise flüssigen Stahl, und anfallende Schlacke S umfasst, wird im regulären Betrieb auf kontinuierliche Weise über einen Ausfluss 11 in einen Zwischenbehälter 20 eingebracht. Im einfachsten Fall fließt das Schmelzgut aus einer Öffnung des Einschmelzgefäßes 10 in den Zwischenbehälter 20. Selbstverständlich kann der Ausfluss über Mittel verfügen, um die Durchflussmenge des Schmelzguts zu regulieren, insbesondere den Ausfluss zu stoppen.

Der Zwischenbehälter 20 ist in Transportrichtung des Schmelzguts gesehen zwischen dem Einschmelzgefäß 10 und einem etwaigen Torpedowagen 30, einer Stahlpfanne (nicht dargestellt) oder einer anderen Einrichtung zum Transport und/oder zur Weiterverarbeitung des flüssigen Metalls, beispielsweise einer Kokille einer Stranggießanlage, vorgesehen. Der Zwischenbehälter 20 übernimmt somit eine Pufferfunktion hinter dem Einschmelzgefäß 10.

Der Zwischenbehälter 20 weist ein Wehr 21 auf, welches das Innere des Zwischenbehälters 20 in zwei Auffangräume 22a, 22b unterteilt. Das Wehr 21 ist eine hitzebeständige Wand, die vorzugsweise beweglich ist, um einen bodenseitigen Durchgang 23, der die beiden Auffangräume 22a und 22b in Fluidkommunikation bringt, einstellen zu können. Zu diesem Zweck ist das Wehr 21 vorzugsweise vertikal beweglich eingerichtet.

Das Schmelzgut, d.h. das geschmolzene Metall M und die Schlacke S, wird durch den Ausfluss 11 in den ersten Auffangraum 22a eingebracht, wodurch sich die Schlacke S, die eine geringere Dichte als das geschmolzene Metall M aufweist, an der Oberfläche des Schmelzguts sammelt. Das Wehr 21 verhindert, dass die Schlacke S in den zweiten Auffangraum 22b gerät, wohingegen der Durchgang 23 dafür sorgt, dass sich der zweite Auffangraum 22b mit geschmolzenem Metall M auffüllt. Auf diese Weise findet die Trennung der Schlacke S vom flüssigen Metall M statt.

Das Zwischengefäß 20 weist einen Schlackenauslauf 24 auf, über den die Schlacke S im ersten Auffangraum 22a in eine Schlackenpfanne 40 oder ein anderes Auffanggefäß ablaufen kann. Das Zwischengefäß 20 weist ferner einen Metallauslauf 25 auf, über den das flüssige Metall aus dem zweiten Auffangraum 22b in den Torpedowagen 30 oder ein anderes Auffanggefäß ablaufen kann. Die Schlackenabscheidung und/oder Metallabscheidung können auf diese Weise kontinuierlich erfolgen. Der Schlackenauslauf 24 und/oder der Metallauslauf 25 sind im einfachsten Fall Überlaufabschnitte des Zwischengefäßes 20; sie können jedoch auch auf andere Weise realisiert werden, insbesondere können sie (analog nur einer von beiden) schwenkbar, wie durch Pfeile in der Figur 1 gekennzeichnet, oder auf andere Weise verstellbar eingerichtet sein, um den Ausfluss zu regulieren.

Auf diese Weise ist ein kontinuierlicher Metallherstellungsprozess mit Pufferfunktion realisierbar, wodurch auf zusätzliche Aggregate und Kranbewegungen, die bei einem diskontinuierlichen Prozess nötig wären, eingespart werden können.

Das Zwischengefäß 20 ist vorzugsweise insgesamt kippbar eingerichtet, um verschiedenen Betriebsbedingungen gerecht zu werden, insbesondere eine bessere Regelung des Schmelzflusses zu erzielen.

Im Ausführungsbeispiel der Figur 1 ist eine Heizeinrichtung 26 vorgesehen, die beispielhaft mittels zweier Plasmabrenner 26a ausgeführt ist. Je ein Plasmabrenner 26a ist zur Erwärmung oder Aufrechterhaltung der Temperatur des Schmelzguts im ersten Auffangraum 22a und zweiten Auffangraum 22b vorgesehen. Dazu wird das Schmelzgut im ersten Auffangraum 22a (analog zweiter Auffangraum 22b) direkt mit der Flamme des Plasmabrenners beaufschlagt. Die Temperierung des Schmelzguts im ersten Auffangraum 22a trägt maßgeblich dazu bei, dass auf eine starke Überhitzung des Einsatzmaterials E im Einschmelzgefäß 10 verzichtet werden kann. Dies wiederum ermöglicht einen energieschonenden Betrieb der Vorrichtung 1. Zudem wird das Metall im Zwischenbehälter 20 auf ökonomische Weise gepuffert, ohne dass es zu Qualitätseinbußen kommt. Durch die Pufferung können beispielsweise Unterbrechungen bei der Weiterverarbeitung oder unterschiedliche Verarbeitungsgeschwindigkeiten kompensiert werden.

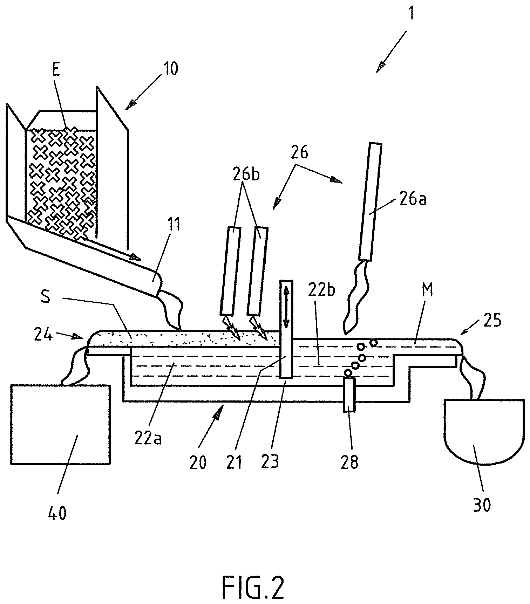

Grundsätzlich kann die Heizeinrichtung 26 für den Zwischenbehälter 20 auf verschiedene Art und Weise realisiert werden; verschiedene Kombinationen und Anordnungen an Brennern, Plasmabrennern, Induktionsheizungen und/oder Elektroheizungen sind möglich. Wichtig jedoch ist, dass das Schmelzgut des ersten Auffangraums 22a aus den obigen Gründen direkt beheizt bzw. temperiert wird, vorzugsweise mit der Flamme eines Brenners oder Elektroden direkt in Kontakt kommt. Zudem ist zu beachten, dass Induktionsheizungen für große Schmelzmassen, über 5 oder 8 t, und dicke feuerfeste Wanddicken ungeeignet sind. Aus diesem Grund wird die Heizeinrichtung 26 des Zwischenbehälters 20 vorzugsweise mithilfe eines oder mehrerer Plasmabrenner 26a und/oder Elektroden 26b (vgl. Ausführungsbeispiel der Figur 2) für ein Lichtbogenerhitzen ausgeführt.

Das in der Figur 2 dargestellte Ausführungsbeispiel unterscheidet sich von der Vorrichtung der Figur 1 darin, dass die Temperierung des ersten Auffangraums 22a mittels Elektroden 26b für ein Lichtbogenerhitzen realisiert wird. Ferner weist der Zwischenbehälter 20 eine Spüleinrichtung 28 auf, die aktiv zu einer Homogenisierung der Metallschmelze M beiträgt. Zu diesem Zweck ist die Spüleinrichtung 28 im zweiten Auffangraum 22b vorgesehen.

### Bezugszeichenliste

- 1: Vorrichtung zur kontinuierlichen Herstellung von Metall
- 10: Einschmelzgefäß
- 11: Ausfluss
- 20: Zwischenbehälter
- 21: Wehr
- 22a: Erster Auffangraum
- 22b: Zweiter Auffangraum
- 23: Durchgang
- 24: Schlackenauslauf
- 25: Metallauslauf
- 26: Heizeinrichtung
- 26a: Plasmabrenner
- 26b: Elektroden
- 28: Spüleinrichtung
- 30: Torpedowagen
- 40: Schlackenpfanne

- E: Einsatzmaterial
- M: Metall
- S: Schlacke

## Patentansprüche

1. Vorrichtung (1) zur kontinuierlichen Herstellung von Metall, vorzugsweise Stahl, die ein Einschmelzgefäß (10) zum Einschmelzen metallischer Einsatzmaterialen (E), wodurch ein Schmelzgut, das flüssiges Metall (M) und Schlacke (S) umfasst, hergestellt wird, und einen Zwischenbehälter (20) aufweist, wobei
der Zwischenbehälter (20) ein Wehr (21) aufweist, das den Zwischenbehälter (20) in einen ersten Auffangraum (22a), in den das Schmelzgut aus dem Einschmelzgefäß (10) über einen Ausfluss (11) auf kontinuierliche Weise einbringbar ist, und einen zweiten Auffangraum (22b) unterteilt, wobei die beiden Auffangräume (22a, 22b) über einen Durchgang (23) in Fluidkommunikation stehen, wodurch eine Trennung der Schlacke (S) und des flüssigen Metalls (M) derart erfolgt, dass sich die Schlacke (S) im ersten Auffangraum (22a) sammelt, während im zweiten Auffangraum (22b) im Wesentlichen keine Schlacke (S) vorhanden ist, und
die Vorrichtung ferner eine Heizeinrichtung (26) aufweist, die das Schmelzgut im ersten Auffangraum (22a) temperiert
**dadurch gekennzeichnet, dass**
das Wehr (21) zur Einstellung des Durchgangs (23) beweglich ist, wodurch der Öffnungsquerschnitt des Durchgangs (23) einstellbar ist.

2. Vorrichtung nach Anspruch 1, **dadurch gekennzeichnet, dass** die Heizeinrichtung (26) ein Heizelement aufweist, das direkt mit dem Schmelzgut im ersten Auffangraum (22a) in Kontakt kommt.

3. Vorrichtung nach Anspruch 1 oder 2, **dadurch gekennzeichnet, dass** die Heizeinrichtung (26) umfasst: einen Brenner, vorzugsweise Plasmabrenner (26a), dessen Flamme mit dem Schmelzgut im ersten Auffangraum (22a) in Kontakt bringbar ist, und/oder Elektroden (26b) für ein Lichtbogenerhitzen, die vorzugsweise in das Schmelzgut im ersten Auffangraum (22a) eintauchbar sind.

4. Vorrichtung nach einem der vorigen Ansprüche, **dadurch gekennzeichnet, dass** das Wehr (21) zur Einstellung des Durchgangs (23) vertikal heb- und senkbar ist.

5. Vorrichtung nach einem der vorigen Ansprüche, **dadurch gekennzeichnet, dass** der Zwischenbehälter (20) kippbar ist.

6. Vorrichtung nach einem der vorigen Ansprüche, **dadurch gekennzeichnet, dass** das Zwischengefäß (20) einen Schlackenauslauf (24) aufweist, über den die Schlacke (S) aus dem ersten Auffangraum (22a) abführbar ist, wobei der Schlackenauslauf (24) vorzugsweise einen einstellbaren, beispielsweise schwenkbaren, Überlauf aufweist.

7. Vorrichtung nach einem der vorigen Ansprüche, **dadurch gekennzeichnet, dass** das Zwischengefäß (20) einen Metallauslauf (25) aufweist, über den das geschmolzene Metall (M) aus dem zweiten Auffangraum (22a) abführbar ist, wobei der Metallauslauf (25) vorzugsweise einen einstellbaren, beispielsweise schwenkbaren, Überlauf aufweist.

8. Verfahren (1) zur kontinuierlichen Herstellung von Metall, vorzugsweise Stahl, das aufweist:
Einschmelzen von metallischen Einsatzmaterialien (E) in einem Einschmelzgefäß (10), wodurch ein Schmelzgut, das flüssiges Metall (M) und Schlacke (S) umfasst, hergestellt wird;
Einbringen des Schmelzguts aus dem Einschmelzgefäß (10) über einen Ausfluss (11) in einen ersten Auffangraum (22a) eines Zwischenbehälters (20) auf kontinuierliche Weise, wobei der Zwischenbehälter (20) ein Wehr (21) aufweist, das den Zwischenbehälter (20) in den ersten Auffangraum (22a) und einen zweiten Auffangraum (22b) unterteilt, wobei die beiden Auffangräume (22a, 22b) über einen Durchgang (23) in Fluidkommunikation stehen;
Trennen der Schlacke (S) und des flüssigen Metalls (M) in dem Zwischenbehälter (20) derart, dass sich die Schlacke (S) im ersten Auffangraum (22a) sammelt, während im zweiten Auffangraum (22b) im Wesentlichen keine Schlacke (S) vorhanden ist; und
Temperieren des Schmelzguts im ersten Auffangraum (22a) mittels einer Heizeinrichtung (26);
**dadurch gekennzeichnet, dass**
das Wehr (21) zur Einstellung des Durchgangs (23) bewegt wird, wodurch der Öffnungsquerschnitt des Durchgangs (23) eingestellt wird.

9. Verfahren nach Anspruch 8, **dadurch gekennzeichnet, dass** die Heizeinrichtung (26) ein Heizelement aufweist, das direkt mit dem Schmelzgut im ersten Auffangraum (22a) in Kontakt kommt.

10. Verfahren nach Anspruch 8 oder 9, **dadurch gekennzeichnet, dass** die Temperierung mittels eines Brenners, vorzugsweise Plasmabrenners (26a), dessen Flamme mit dem Schmelzgut im ersten Auffangraum (22a) in Kontakt gebracht wird, und/oder mittels Elektroden (26b) für ein Lichtbogenerhitzen, die vorzugsweise in das Schmelzgut im ersten Auffangraum (22a) eingetaucht sind, erfolgt.

11. Verfahren nach einem der Ansprüche 8 bis 10, **dadurch gekennzeichnet, dass** das Wehr (21) zur Einstellung des Durchgangs (23) vertikal gehoben und/oder gesenkt wird.

12. Verfahren nach einem Ansprüche 8 bis 11, **dadurch gekennzeichnet, dass** der Zwischenbehälter (20) gekippt wird.

13. Verfahren nach einem der Ansprüche 8 bis 12, **dadurch gekennzeichnet, dass** die Schlacke (S) aus dem ersten Auffangraum (22a) über einen Schlackenauslauf (24) abgeführt wird, wobei der Schlackenauslauf (24) vorzugsweise einen einstellbaren, beispielsweise schwenkbaren, Überlauf aufweist.

14. Verfahren nach einem der Ansprüche 8 bis 13, **dadurch gekennzeichnet, dass** das geschmolzene Metall (M) aus dem zweiten Auffangraum (22b) über einen Metallauslauf (25) abgeführt wird, wobei der Metallauslauf (25) vorzugsweise einen einstellbaren, beispielsweise schwenkbaren, Überlauf aufweist.

## Claims

1. Device (1) for continuous production of metal, preferably steel, which is produced in a smelting vessel (10) for melting down metallic feedstock materials (E), whereby a molten material comprising liquid metal (M) and slag (S) is produced, and a tundish (20),
wherein
the tundish (20) has a weir (21) dividing the tundish (20) into a first collecting space (22a), into which the molten material from the smelting vessel (10) can be continuously introduced via an outflow (11), and a second collecting space (22b), wherein the two collecting spaces (22a, 22b) are in fluid communication by way of a passage (23), whereby separation of the slag (S) and the liquid metal (M) takes place in such a way that the slag (S) collects in the first collecting space (22a), whereas substantially no slag (S) is present in the second collecting space (22b), and
the device further comprises heating equipment (26) influencing the temperature of the molten material in the first collecting space (22a),
**characterised in that**
the weir (21) is movable for setting the passage (23), whereby the opening cross-section of the passage (23) is settable.

2. Device according to claim 1, **characterised in that** the heating equipment (26) comprises a heating element which comes into direct contact with the molten material in the first collecting space (22a).

3. Device according to claim 1 or 2, **characterised in that** the heating device (26) comprises a burner, preferably a plasma burner (26a), the flame of which can be brought into contact with the molten material in the first collecting space (22a), and/or electrodes (26b) for arc heating, the electrodes preferably being immersible in the molten material in the first collecting space (22a).

4. Device according to any one of the preceding claims, **characterised in that** the weir (21) is vertically raisable and lowerable for setting the passage (23).

5. Device according to any one of the preceding claims, **characterised in that** the tundish (20) is tiltable.

6. Device according to any one of the preceding claims, **characterised in that** the tundish (20) has a slag outlet (24) by way of which the slag (S) can be conducted out of the first collecting space (22a), wherein the slag outlet (24) has an overflow which is preferably settable, for example pivotable.

7. Device according to any one of the preceding claims, **characterised in that** the tundish (20) has a metal outlet (25) by way of which the molten metal (M) can be conducted out of the second collecting space (22a), wherein the metal outlet (25) has an overflow which is preferably settable, for example pivotable.

8. Method (1) for continuous production of metal, preferably steel, comprising:
melting down metallic feedstock materials (E) in a smelting vessel (10), whereby a molten material comprising liquid metal (M) and slag (S) is produced;
continuously introducing the molten material from the smelting vessel (10) via an outflow (11) into a first collecting space (22a) of a tundish (20), wherein the tundish (20) comprises a weir (21) dividing the tundish (20) into the first collecting space (22a) and a second collecting space (22b) and wherein the two collecting spaces (22a, 22b) are in fluid communication by way of a passage (23);
separating the slag (S) and the liquid metal (M) in the tundish (20) in such a way that the slag (S) collects in the first collecting space (22a), whereas substantially no slag (S) is present in the second collecting space (22b); and
influencing the temperature of the molten material in the first collecting space (22a) by means of heating equipment (26);
**characterised in that**
the weir (21) is moved for setting the passage (23), whereby the opening cross-section of the passage (23) is set.

9. Method according to claim 8, **characterised in that** the heating equipment (26) comprises a heating element which comes into direct contact with the molten material in the first collecting space (22a).

10. Method according to claim 8 or 9, **characterised in that** the temperature influencing is carried out by means of a burner, preferably plasma burner (26a), the flame of which is brought into contact with the molten material in the first collecting space (22a), and/or by means of electrodes (26b) for arc heating, the electrodes preferably being immersed in the molten material in the first collecting space (22a).

11. Method according to any one of claims 8 to 10, **characterised in that** the weir (21) is vertically raised and/or lowered for setting the passage (23).

12. Method according to any one of claims 8 to 11, **characterised in that** the tundish (20) is tilted.

13. Method according to any one of claims 8 to 12, **characterised in that** the slag (S) is conducted out of the first collecting space (22a) via a slag outlet (24), wherein the slag outlet (24) comprises an overflow which is preferably settable, for example pivotable.

14. Method according to any one of claims 8 to 13, **characterised in that** the molten metal (M) is conducted out of the second collecting space (22b) via a metal outlet (25), wherein the metal outlet (25) comprises an overflow which is preferably settable, for example pivotable.

## Revendications

1. Dispositif (1) pour la production de métal, de préférence d'acier, de manière continue, qui présente une cuve de traitement par fusion (10) destinée au traitement parfusion de produits d'alimentation métalliques (E), par l'intermédiaire de laquelle on obtient un produit en fusion qui comprend le métal liquide (M) et du laitier (S), ainsi qu'un récipient intermédiaire (20) ; dans lequel le récipient intermédiaire (20) présente un élément faisant office de digue (21) qui subdivise le récipient intermédiaire (20) en un premier espace de récolte (22a), dans lequel on peut introduire d'une manière continue le produit en fusion à partir de la cuve de traitement par fusion (10) en passant par une sortie (11), et en un deuxième espace de récolte (22b) ; dans lequel les deux espaces de récolte (22a, 22b) sont mis en communication fluidique par l'intermédiaire d'un passage (23), si bien qu'une séparation du laitier (S) et du métal liquide (M) a lieu d'une manière telle que le laitier (S) est récolté dans le premier espace de récolte (22a), tandis que, dans le deuxième espace de récolte (22b), on ne retrouve essentiellement aucune quantité de laitier (S) ; et le dispositif présente en outre un mécanisme de chauffage (26) qui maintient la température du produit en fusion dans le premier espace de récolte (22a), **caractérisé en ce que** l'élément faisant office de digue (21) est mobile pour le réglage du passage (23), si bien que l'on peut régler la section transversale de l'ouverture du passage (23).

2. Dispositif selon la revendication 1, **caractérisé en ce que** le mécanisme de chauffage (26) présente un élément de chauffage qui entre directement en contact avec le produit en fusion dans le premier espace de récolte (22a).

3. Dispositif selon la revendication 1 ou 2, **caractérisé en ce que** le mécanisme de chauffage (26) comprend : un brûleur, de préférence une torche à plasma (26a), dont la flamme peut être mise en contact avec le produit en fusion dans le premier espace de récolte (22a), et/ou des électrodes (26b) pour un chauffage par le biais d'un arc électrique, que l'on peut plonger de préférence dans le produit en fusion dans le premier espace de récolte (22a).

4. Dispositif selon l'une quelconque des revendications précédentes, **caractérisé en ce que** l'élément faisant office de digue (21) peut être soulevé et abaissé en direction verticale pour le réglage du passage (23).

5. Dispositif selon l'une quelconque des revendications précédentes, **caractérisé en ce que** l'on peut faire basculer le récipient intermédiaire (20).

6. Dispositif selon l'une quelconque des revendications précédentes, **caractérisé en ce que** le récipient intermédiaire (20) présente une sortie (24) pour le laitier, par l'intermédiaire de laquelle le laitier (S) peut être évacué hors du premier espace de récolte (22a) ; dans lequel la sortie (24) pour le laitier présente de préférence un trop-plein qui peut être réglé, par exemple que l'on peut faire pivoter.

7. Dispositif selon l'une quelconque des revendications précédentes, **caractérisé en ce que** le récipient intermédiaire (20) présente une sortie (25) pour le métal, par l'intermédiaire de laquelle on peut évacuer le métal en fusion (M) à partir du deuxième espace de récolte (22a) ; dans lequel la sortie (25) pour le métal présente de préférence un trop-plein qui peut être réglé, par exemple que l'on peut faire pivoter.

8. Procédé (1) pour la production de métal, de préférence d'acier, de manière continue, qui présente :
la mise en fusion de produits d'alimentation métalliques (E) dans une cuve de traitement par fusion (10), par l'intermédiaire de laquelle on obtient un produit en fusion qui comprend le métal liquide (M) et du laitier (S) ;
l'introduction de manière continue du produit en fusion à partir de la cuve de traitement par fusion (10) par l'intermédiaire d'une sortie (11) dans un premier espace de récolte (22a) d'un récipient intermédiaire (20) ; dans lequel le récipient intermédiaire (20) présente un élément faisant office de digue (21) qui subdivise le récipient intermédiaire (20) en un premier espace de récolte (22a) et en un deuxième espace de récolte (22b) ; dans lequel les deux espaces de récolte (22a, 22b) sont mis en communication fluidique par l'intermédiaire d'un passage (23) ;
la séparation du laitier (S) et du métal liquide (M) d'une manière telle que le laitier (S) est récolté dans le premier espace de récolte (22a), tandis que, dans le deuxième espace de récolte (22b), on ne retrouve essentiellement aucune quantité de laitier (S) ; et
le maintien de la température du produit en fusion dans le premier espace de récolte (22a) au moyen d'un mécanisme de chauffage (26) ;
**caractérisé en ce que** l'élément faisant office de digue (21) est mis en mouvement pour le réglage du passage (23), si bien que l'on règle la section transversale de l'ouverture du passage (23).

9. Procédé selon la revendication 8, **caractérisé en ce que** le mécanisme de chauffage (26) présente un élément de chauffage qui entre directement en contact avec le produit en fusion dans le premier espace de récolte (22a).

10. Procédé selon la revendication 8 ou 9, **caractérisé en ce que** le maintien de la température a lieu au moyen d'un brûleur, de préférence d'une torche à plasma (26a), dont la flamme est mise en contact avec le produit en fusion dans le premier espace de récolte (22a), et/ou au moyen d'électrodes (26b) pour un chauffage par le biais d'un arc électrique, que l'on peut plonger de préférence dans le produit en fusion dans le premier espace de récolte (22a).

11. Procédé selon l'une quelconque des revendications 8 à 10, **caractérisé en ce que** l'élément faisant office de digue (21) peut être soulevé et abaissé en direction verticale pour le réglage du passage (23).

12. Procédé selon l'une quelconque des revendications 8 à 11, **caractérisé en ce que** l'on peut faire basculer le récipient intermédiaire (20).

13. Dispositif selon l'une quelconque des revendications 8 à 12, **caractérisé en ce que** le laitier (S) est évacué hors du premier espace de récolte (22a) par l'intermédiaire d'une sortie (24) pour le laitier; dans lequel la sortie (24) pour le laitier présente de préférence un trop-plein qui peut être réglé, par exemple que l'on peut faire pivoter.

14. Dispositif selon l'une quelconque des revendications 8 à 13, **caractérisé en ce que** le métal en fusion (M) est évacué hors du deuxième espace de récolte (22a) par l'intermédiaire d'une sortie (25) pour le métal ; dans lequel la sortie (25) pour le métal présente de préférence un trop-plein qui peut être réglé, par exemple que l'on peut faire pivoter.
